# EUROPEAN PATENT SPECIFICATION

(11) **EP 4 406 759 B1**
(45) Date of publication and mention of the grant of the patent: **17.12.2025**
(21) Application number: 22872480.3
(22) Date of filing: 17.06.2022
(51) Int. Cl.: B60C 11/03, B60C 11/12, B60C 11/13

(54) **TIRE**
REIFEN
PNEU

(30) Priority: 22.09.2021 JP 2021154870
(43) Date of publication of application: 31.07.2024
(73) Proprietor: BRIDGESTONE CORPORATION, Chuo-ku Tokyo 104-8340 (JP)
(72) Inventor: SUGISAWA, Shinya, Tokyo 104-8340 (JP)
(74) Representative: Marks & Clerk LLP
(86) International application number: PCT/JP2022/024414
(87) International publication number: WO 2023/047722

(56) References cited:
- EP-A1- 3 984 772
- EP-A1- 3 984 778
- WO-A1-2020/250991
- WO-A1-2021/111664
- JP-A- 2019 135 124
- JP-A- 2021 088 311

## Description

### TECHNICAL FIELD

This invention relates to a tire.

### BACKGROUND

Tires having sipes whose width at the bottom portion is widened in order to control the decrease in drainage performance of the tire when tire wear has progressed, have been disclosed (Patent Document 1).

### CITATION LIST

### Patent Literature

PTL 1: JP 2018-111421 A
PTL 2: JP 2021-088311 A discloses a pneumatic tire which suppresses occurrence of pattern noise, improves drainage in abrasion progress and comprises a plurality of circumferential direction main grooves extending in a tire circumferential direction on a tread surface, a plurality of width direction grooves extending inside in a tire width direction from a tread end and a plurality of width direction sipes that extend inside in the tire width direction from the inner end in the tire width direction of the width direction groove and communicate with the circumferential direction main groove in a land part on the outermost side in the width direction. The width direction sipes have expanded parts having sipe widths larger than that on the tread surface side and have rectangular rates of less than 0.8 on the sipe bottom side. The expanded part of the width direction sipe has a part that extends in the tire width direction while being inclined at a first inclination angle in a tire radial direction region where the expanded part is positioned, and the width direction sipe extends in the tire width direction while being inclined at a second inclination angle smaller than the first inclination angle or extends in the tire width direction in plan view of the tread surface.
PTL 3: JP 2019-135124 A discloses a tire to improve wet performance and icy road performance in a well-balanced manner and comprising a tread portion, wherein the tread portion is provided with a land portion having a tread surface and a wall surface, and the land portion includes a vertical hole having one end opening at the tread surface and the other end extending radially inward in the tire direction, a horizontal hole having one end opening at the wall surface, extending inside the land portion and the other end communicating with the vertical hole, and a sipe opening at the tread surface and communicating with the vertical hole and the horizontal hole, and the opening width in the tire axial direction of the one end of the vertical hole is 5% to 20% of the axial width of the land portion.
PTL 4: WO 2021/111664 A1 discloses a pneumatic tire that has, on a tread surface, a plurality of circumferential-direction main grooves that extend in a tire circumferential direction, and has, in a land part on the width-direction outermost side, a plurality of width-direction grooves that extend from a tread end to a tire-width-direction inner side, and a plurality of width-direction sipes that extend from the tire-width-direction inner side end of the width-direction grooves to the tire-width-direction inner side so as to be connected to the circumferential-direction main grooves. Each of the width-direction sipes has, on the sipe bottom side, a widening part of which the sipe width becomes larger than that on the tread surface side, and a rectangular rate of the wide-direction sipe is not less than 0.8. The width-direction sipe extends to be inclined at a first inclination angle with respect to a tire width direction in a plan view of the tread surface. In a radial-direction region where the widening part is located, the widening part has a portion that extends to be inclined at a second inclination angle less than the first inclination angle with respect to the tire width direction or extends in the tire width direction.
PTL 5: WO 2020/250991 A1 discloses a pneumatic tire having a tread and including a plurality of circumferential grooves, wherein, in at least outermost circumferential grooves on the outermost sides in the tire width direction, a plurality of ridge parts protruding from the groove bottom and crossing the outermost circumferential grooves are formed at intervals in the tire circumferential direction; and a plurality of land portions defined by the circumferential grooves, wherein width-direction grooves in at least shoulder land portions in shoulder areas have wide grooves with expanded groove width at the groove bottom, and thereby capable of effectively cooling the shoulder land potions of the tread, which are most prone to deformation and heat generation, and reducing an increase in temperature.
PTL 6: EP 3 984 778 A1 discloses a pneumatic tire in which land portions are formed by being partitioned by circumferential grooves and widthwise fine grooves are formed on the land portions and extend in a tire widthwise direction. The widthwise fine grooves have a widened groove portion of an increased groove width on a groove bottom thereof, and in a state in which the tire is worn to a depth of 50% of a depth from a tread treading face of an unused tire to an end face of a tread wear indicator, an inner side land portion cross sectional area ratio of the inner side land portion on a tire equator line side is higher than an outer side land portion cross sectional area ratio of the outer side land portion on the outer side in the tire widthwise direction. By this, the pneumatic tire can suppress uneven wear after the middle stage of wear while a wet grip performance is normally kept good.

### SUMMARY

### (Technical Problem)

However, there is room for further improvement in the prior art with regard to drainage performance when tire wear has progressed.

Therefore, the purpose of the present invention is to provide a tire with sufficient drainage performance even when tire wear has progressed.

### (Solution to Problem)

The gist of the present invention is as follows.

A tire having a plurality of circumferential main grooves extending in the tire circumferential direction on a tread surface,
at least one shoulder groove is provided in a shoulder land portion, which is defined by the circumferential main groove located at the outermost side in the tire width direction and a tread edge,
the shoulder groove has a widened section on the groove bottom side where a groove width is larger than that on the tread surface side,
the shoulder groove extends along the tire width direction on the tread surface,
a maximum width portion in the tire radial direction of the widened section extends at an angle of 25° or more with respect to the tire width direction in a plane view of the tread surface,
wherein extension length on the tread surface of the shoulder groove is 25% or more of a ground contact width of the tire,
wherein the shoulder land portion is divided into a plurality of block land portions by a plurality of width direction grooves extending in the tire width direction and connected to the tread edge and the circumferential main groove, and
two to ten of the block land portions are arranged within a contact patch of the tire.

### (Advantageous Effect)

The present invention can provide a tire with sufficient drainage performance even when tire wear has progressed.

### BRIEF DESCRIPTION OF THE DRAWINGS

In the accompanying drawings:
FIG. 1 schematically illustrates the contact patch of a tire according to the first embodiment of this invention, viewed in the tire axial direction;
FIG. 2 is a cross-sectional view along the line A-A in FIG. 1;
FIG. 3 is a schematic perspective view for explaining the shape of the shoulder groove; and
FIG. 4 schematically illustrates the contact patch of a tire according to the second embodiment of this invention.

### DETAILED DESCRIPTION

The tire of the present invention can be used for any type of tire, but can suitably be used for passenger car tires.

The following is illustrative descriptions of embodiments of the tire according to the present invention, with reference to the drawings. In each figure, common components are given the same reference numerals.

### [First embodiment]

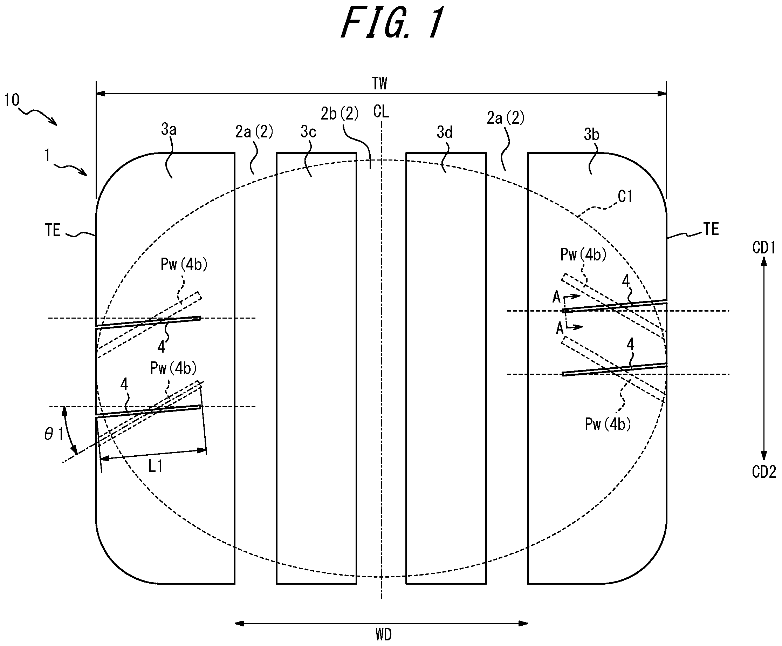

Figure 1 schematically illustrates the contact patch of a tire 10 according to the first embodiment of this invention, viewed in the tire axial direction. In Figure 1, the grooves in a plan view of the tread surface 1 when tire wear has progressed are also indicated by dotted lines. Also, in Figure 1, the outer contour line of the contact patch when tire wear has progressed is schematically indicated by the dotted line C1.

As used herein, the term "tread surface (1)" means the outer circumferential surface of the tire that is in contact with the road surface when the tire is assembled on a rim, filled with prescribed internal pressure, and rolled under a maximum load.

In this document, the term "tread edge (TE)" means the outer edge of the tread surface (1) in the tire width direction.

As used herein, the term "rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the term "rim" includes current sizes as well as future sizes to be listed in the aforementioned industrial standards. An example of the "size as described in the future" could be the sizes listed as "FUTURE DEVELOPMENTS" in the ETRTO 2013 edition.). For sizes not listed in these industrial standards, the term "applicable rim" refers to a rim with a width corresponding to the bead width of the pneumatic tire.

Also, the term "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the "prescribed internal pressure" refers to the air pressure (maximum air pressure) corresponding to the maximum load capacity specified for each vehicle in which the tire is mounted.

The term "maximum load" refers to the load corresponding to the above maximum load capacity.

The air here can be replaced by inert gas such as nitrogen gas or other inert gas.

In this document, unless otherwise noted, the dimensions of each element such as grooves and land portions, ground width (TW), etc., shall be measured in the "reference condition" described below.

As used herein, the term "reference condition" refers to the condition in which the tire is assembled on the rim, filled with the above prescribed internal pressure, and unloaded.

In this document, the term "groove width" refers to the distance between a pair of mutually opposing groove wall surfaces when measured perpendicularly to the extending direction of the groove. As used herein, the term "groove depth" refers to the distance from the tread surface to the groove bottom position in a cross-section along the groove width direction, in the direction perpendicular to the tread surface.

Also, in this document, the term "contact patch" shall mean the outer surface of the tire that contacts the road surface when the tire is assembled on the rim, filled with the prescribed internal pressure, and grounded with the maximum load applied.

As used herein, the term "tire circumferential direction" is also referred to as "tire circumferential direction CD1" or "tire circumferential direction CD2", and the term "tire width direction" is also referred to as "tire width direction WD". In each figure, the tire circumferential direction (CD) is indicated by the arrows CD1 and CD2, and the tire width direction (WD) is indicated by the arrow WD.

As illustrated in Figure 1, the tire 10 according to the first embodiment, not according to the present invention but useful for understanding the present invention, has a plurality of circumferential main grooves 2 extending in the tire circumferential direction on the tread surface. In this embodiment, a pair of circumferential main grooves 2a arranged at the outermost sides in the tire width direction and a circumferential main groove 2b extending along the tire equatorial plane CL are arranged. In the example illustrated in Figure 1, the number of circumferential main grooves 2 is three, but it can be two or four or more.

In the tread plane view of the tread surface 1 of the tire 10 according to this embodiment, both circumferential main grooves 2a and 2b extend without inclination with respect to the tire circumferential direction, but at least one circumferential main groove 2 may extend at an angle with respect to the tire circumferential direction. In such a case, the circumferential main groove may extend at an angle of, for example, 5° or less with respect to the tire circumferential direction. In addition, each circumferential main groove 2 may extend in a straight line along the tire circumferential direction, as illustrated in Figure 1, or it may extend circumferentially in a zigzag or wavy shape, etc.

The widths of the circumferential main grooves 2a and 2b are not limited, however, from the viewpoint of drainage performance and steering stability, it is preferable that the grooves be configured so that, for example, when the tire is mounted on the rim, filled with the prescribed internal pressure, and subjected to the maximum load, the pair of opposing groove walls do not come into contact with each other immediately under the load. More specifically, the groove width in the reference condition is preferably greater than 1.5 mm.

Also, the groove depths of the circumferential main grooves 2a and 2b are also not limited, however, from the viewpoint of sufficient drainage performance and maintenance of tire rigidity, for example, it is preferable that the groove depth be 3 mm or more and 20 mm or less.

On the tread surface 1 of the tire 10 of this embodiment, shoulder land portions 3a and 3b are divided by the pair of circumferential main grooves 2a located at the outermost side in the tire width direction, and the tread edges TE; and center land portions 3c and 3d are divided by the circumferential main groove 2b and the pair of circumferential main grooves 2a.

In the tire 10 of this embodiment, the shoulder land portions 3a and 3b and the center land portions 3c and 3d are rib-like land portions that are not divided in the tire circumferential direction, but can be block-like land portions divided by width direction grooves.

In the example illustrated in Figure 1, the center land portions 3c and 3d do not have grooves or the like extending in the tire width direction, but grooves or the like extending in the tire width direction can be provided as appropriate.

In the tire 10 of this embodiment, at least one shoulder groove 4 is provided in the shoulder land portions 3a and 3b, respectively. In Figure 1, the shoulder grooves 4 are provided within a contact patch, two each in the shoulder land portions 3a and 3b, but the number and arrangement of the shoulder grooves 4 are not limited. For example, only one of the shoulder land portions 3a and 3b may have the shoulder groove 4.

Further details of the shoulder groove 4 are described below with reference to Figures 1, 2, and 3, using the shoulder groove 4 in the shoulder land portion 3a as a typical example.

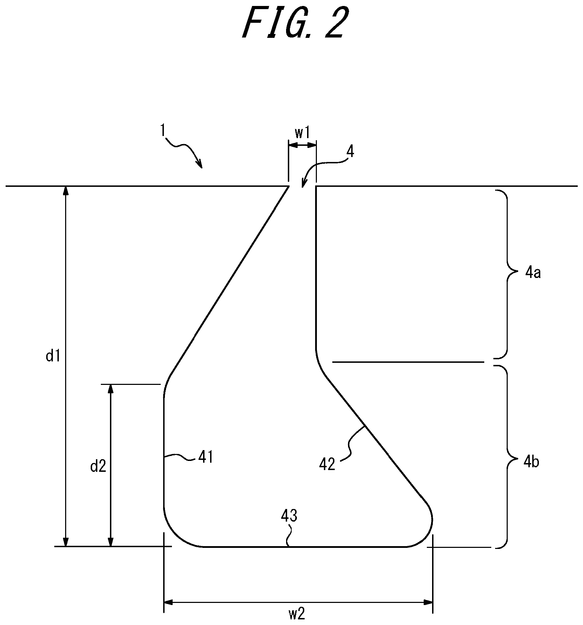

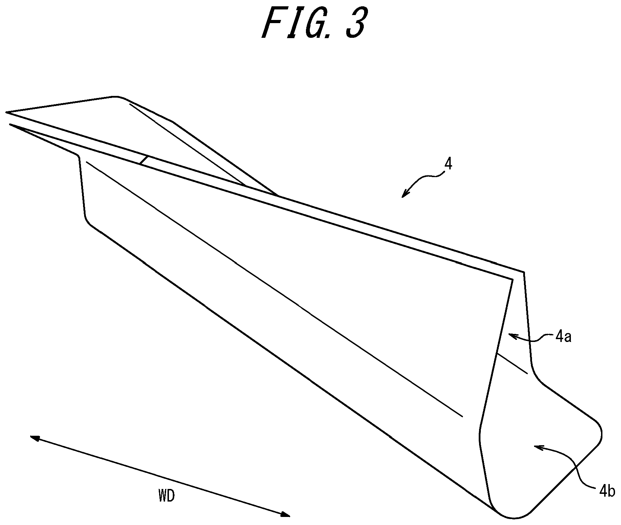

Figure 2 is a cross-sectional view along the line A-A in Figure 1, and Figure 3 is a schematic perspective view for explaining the shape of the shoulder groove.

In this embodiment, the shoulder groove 4 extends along the tire width direction WD on the tread surface 1. Here, extending "along the tire width direction" means that the shoulder groove 4 is parallel to the tire width direction WD in the tire plane view, or the shoulder groove 4 extends at an angle of 5° or less with respect to the tire width direction. The shoulder groove 4 may extend in a straight line in the tire width direction as illustrated in Figure 1, or it may extend in a zigzag or wavy pattern, etc. in the tire width direction. Here, "zigzag pattern in the tire width direction" means that each of the linear portions constituting the zigzag pattern extends along the tire width direction.

In the example illustrated in Figure 1, the shoulder groove 4 opens at the tread edge TE of the shoulder land portion 3a, extends toward the circumferential main groove 2a, and terminates in the shoulder land portion 3a. However, the configuration of the shoulder groove 4 is not limited to this, for example, it may open to both the tread edge TE and the circumferential main groove 2a.

Note, that the groove width of the shoulder groove 4 at the tread surface 1 is not particularly limited.

The shoulder groove 4 has a widened section on the groove bottom side where the groove width is larger than that on the tread surface 1 side. As illustrated in Figure 2, this embodiment has a first widened section 4a on the groove bottom 43 side (in the example illustrated in the figure, in the bottom direction of the paper), where the groove width is larger than that of the tread surface 1 side; and a second widened section 4b on the groove bottom side than the first widened section 4a, where the groove width is larger than that on the first widened section 4a. The shape of the first widened section 4a and 4b is not limited to a particular shape.

For example, as illustrated in Figure 2, the first widened section 4a may be shaped so that the groove width increases in steps from the tread surface 1 toward the second widened section 4b side, or the groove 4 may have a constant groove width without widening from the tread surface 1 to the second widened section 4b.

In addition, as illustrated in Figure 2, the groove 4 may be shaped in a cross-sectional view to have a maximum width portion near the groove bottom 43, with the groove width increasing in steps from the tread surface 1 side to the groove bottom 43 side. The shape of the second widened section 4b is not limited, and the cross-sectional shape of the second widened section 4b may be rectangular or otherwise have a constant groove width from the first widened section 4a side to the groove bottom 43. In addition, the cross-sectional shape of the second widened section 4b may be circular or elliptical, for example, with a maximum width portion halfway from the first widened section 4a side to the groove bottom 43 side.

The shoulder groove 4 may have the boundaries of the groove walls 41 and 42 and the groove bottom 43 as arc-shaped side walls and groove bottom having any radius of curvature, as illustrated in Figure 2, or the groove walls 41 and 42 and the groove bottom 43 may each be straight in a cross section perpendicular to the extending direction of the groove.

As mentioned above, in the tire 10 of the first embodiment, the shoulder groove 4 extends along the tire width direction WD on the tread surface 1, as illustrated in Figure 1. On the other hand, as illustrated by the dotted line in Figure 1, the maximum width portion Pw in the tire radial direction of the second widened section 4b of the shoulder groove 4 is configured so that the inclination angle θ1 with respect to the tire width direction WD is 25° or more in a plane view of the tread surface 1 (i.e., it extends at an angle of 25° or more with respect to the tire width direction WD).

Here, the maximum width portion (Pw) of the second widened section 4b means the portion of the shoulder groove 4 where the distance between a pair of mutually opposing groove wall surfaces when measured, in the reference condition, perpendicular to the extending direction of the second widened section 4b is the largest.

In addition, the inclination angle θ1 of the maximum width portion Pw in a plan view of the tread surface 1 means the inclination angle of the line segment connecting one end of the shoulder groove 4 (in the example illustrated in Figure 1, the one end in the tire width direction) and the other end of the shoulder groove 4 (in the example illustrated in Figure 1, the other end in the tire width direction) with respect to the tire width direction WD, as illustrated in Figure 1 (in the example in Figure 1, the line segment connecting the center in the groove width direction of one end of the shoulder groove 4 with the center in the groove width direction of the other end of the shoulder groove 4).

As illustrated in Figure 3, in the tire 10 of this embodiment, the shoulder groove 4 extends along the tire width direction WD at the tread surface 1 and continuously changes its inclination angle with respect to the tire width direction WD from the tread surface 1 toward the groove bottom side, so that the inclination angle θ1 is to be 25° or more. The shoulder groove 4 is not limited to this configuration and may be configured so that the portion from the tread surface 1 to the second widened section 4b extends along the tire width direction WD and the second widened section 4b extends at a constant inclination angle θ1. Also, the shoulder groove 4 may be configured to have a stepwise angle change from the tread surface 1 to the groove bottom.

The effects of the tire of the first embodiment are described below.

According to the tire 10 of this embodiment, drainage performance can be ensured by disposing the shoulder grooves 4 extending along the tire width direction WD on the tread surface 1 in the shoulder land portions 3a and 3b which are located on the outermost side in the tire width direction. Since the shoulder groove 4 extends along the tire width direction WD, the tire 10 will be grounded along the contour line of the stepping-in side of the ground contact patch when the tire 10 is moving straight ahead, thereby reducing uneven wear and noise generation at the edge of shoulder groove 4.

In addition, the shoulder groove 4 has the widened section (in this embodiment, the first widened section 4a and the second widened section 4b) on the groove bottom side, where the groove width is larger than that on the tread surface 1 side, thus ensuring sufficient drainage performance when tire wear has progressed.

Furthermore, the shoulder groove 4 is inclined at more than 25° with respect to the tire width direction WD when tire wear has progressed. When tire wear has progressed, the outer contour line of the contact patch changes from the state before wear progressed, as illustrated by the dotted line C1 in Figure 1. The drainage performance of the grooves tends to increase as the grooves extend in a direction perpendicular to the outer contour line of the contact patch at a position closer to the stepping-in side of the tire. Therefore, in this embodiment, as illustrated in Figure 1, the shoulder groove 4 extends along the tire width direction before tire wear progresses, and the shoulder groove 4 (the second widened section 4b in this embodiment) extends at an angle of 25° or more with respect to the tire width direction after tire wear has progressed. This promotes, after tire wear has progressed, drainage from the inside in the tier width direction toward the tread edge TE side of the tire, at the timing that the groove is approximately perpendicular to the outer contour line of the ground contact patch, when the shoulder groove 4 is closer to the stepping-in side of the tire as the tire rotates. In addition, by providing the shoulder grooves 4 in the shoulder land portion, drainage toward the tread edge TE is more easily facilitated than when they are disposed in the center land portion, and sufficient drainage performance can be ensured when tire wear has progressed.

The following is a description of suitable configurations, variations, etc., of the tire of the first embodiment.

The groove depth d1 of the shoulder groove 4 is not particularly limited, but from the viewpoint of ensuring sufficient drainage performance and maintaining tire rigidity, it is preferable to make it as deep as the circumferential main grooves 2a and 2b. More specifically, the groove depth d1 is preferably, for example, 3 mm or more and 20 mm or less. More preferably, it is 5 mm or more and 10 mm or less.

The length d2 of the second widened section 4b of the shoulder groove 4 in the groove depth direction is not particularly limited, but from the viewpoint of maintaining sufficient rigidity of the shoulder land portion where the shoulder groove 4 is provided while effectively ensuring sufficient drainage performance, the length d2 is preferably 30% or more and 70% or less of the overall depth d1 of the shoulder groove 4. More preferably, the length d2 is 40% or more and 60% or less of the groove depth d1.

The groove width w1 of the shoulder groove 4 on the tread surface 1 is not particularly limited, but from the viewpoint of effectively maintaining the rigidity of the tire when new, it is suitable to be less than 1.5 mm in the reference condition. From the standpoint of ensuring sufficient drainage performance of the shoulder groove 4, it is suitably at least 1 mm.

The groove width w2 of the maximum width portion Pw of the second widened section 4b of the shoulder groove 4 is not particularly limited, but from the viewpoint of sufficient drainage performance when tire wear has progressed, for example, the groove width w2 can be 1.5 mm or more, and from the viewpoint of maintaining sufficient rigidity of the shoulder land portion in which the shoulder groove 4 is provided, for example, it is suitably 4 mm or less. More suitably, the groove width w2 is 2.0 mm or more and 3.5 mm or less from the viewpoint of both sufficient drainage performance and maintaining the rigidity of the land portions when tire wear has progressed.

The extension length L1 of the shoulder groove 4 on the tread surface 1 is not particularly limited, but is preferably at least 25% of the ground contact width TW of the tire. By setting the extension length L1 to 25% or more of the ground contact width TW of the tire, water from the road surface can be fully captured in the grooves and sufficient drainage performance can be effectively ensured.

The number of the shoulder grooves 4 is not particularly limited, but from the viewpoint of ensuring sufficient drainage performance, it is preferable that two or more grooves are arranged on the shoulder land portions 3a and 3b, respectively, within the contact patch of the tire. More preferably, from the viewpoint of ensuring sufficient drainage performance and rigidity of the land portion where the shoulder grooves 4 are provided, three to ten grooves are preferably arranged in the shoulder land portions 3a and 3b, respectively, within the contact patch.

Here, the term "arranged within the contact patch" shall mean that the shoulder groove 4 is arranged within the contact patch if any part of the shoulder groove 4 is located within the contact patch.

The inclination angle (angle on the acute side) θ1 of the maximum width portion Pw in the tire radial direction of the second widened section 4b of the shoulder groove 4 with respect to the tire circumferential direction WD in a plan view of the tread surface 1 is not particularly limited as long as it is 25° or more, but it is preferably 50° or less in order to effectively ensure sufficient drainage performance while maintaining the sufficient circumferential traction performance of the tire. More suitably, the inclination angle θ1 of the second widened section 4b is 28° or more and 45° or less.

Although the direction of rotation of the tire 10 is not particularly limited, it is preferable that the tire 10 be mounted so that it rotates in the direction of tire circumferential direction CD1 in Figure 1, or that the tire 10 is a tire which is specified or recommended to be mounted to rotate in that direction, to promote more effective drainage from the inside edge in the tire width direction of the shoulder groove 4 to the tread edge TE side when tire wear has progressed. In the example in Figure 1, this means, after the tire wear progresses, that the tire is rotated so that the maximum width portion Pw slopes from the stepping-in side to the kicking-out side of the tire as it moves from the inside to the outside of the tire width direction. Such mounting promotes more effective drainage by the second widened section 4b of shoulder groove 4 from the stepping-in side to the kicking-out side of the contact patch of the tire. Furthermore, after the tire wear progresses, the grooves will be sloped and extending in the direction of water drainage from the stepping-in side of the contact patch of the tire, which will provide sufficient wet grip with the road surface.

### [Second embodiment]

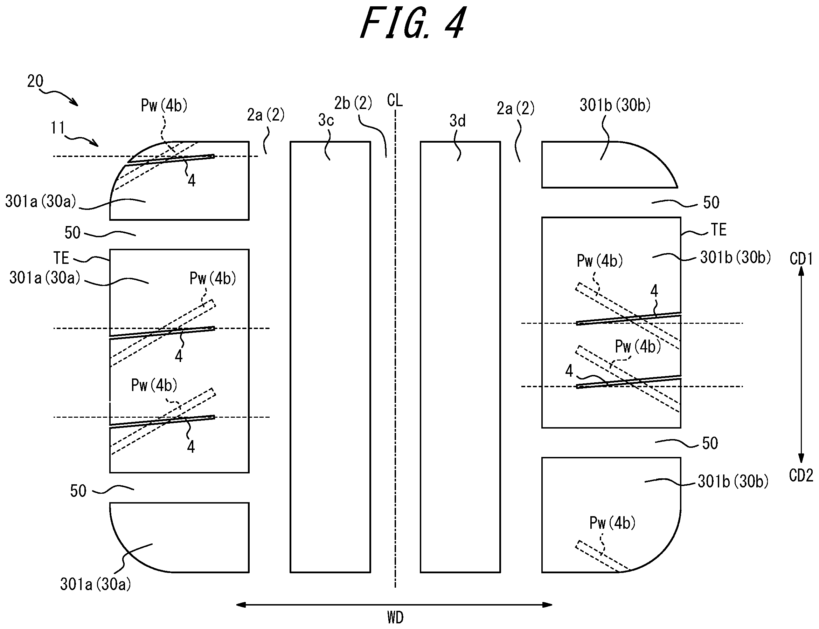

Next, the tire according to an embodiment of this invention (the second embodiment) is described with reference to Figure 4. The tire 20 of the second embodiment has the same configuration as the tire of the first embodiment, except that the shoulder land portion has a different configuration. Therefore, the components similar to those in the first embodiment are given the same reference numerals and their descriptions will be omitted.

Figure 4 schematically illustrates the contact patch of a tire 20 according to the second embodiment of this invention. In Figure 4, the grooves in a plan view of the tread surface 11 when tire wear has progressed are also indicated by dotted lines.

On the tread surface 11 of the tire 20 of this embodiment, shoulder land portions 30a and 30b are divided by the pair of circumferential main grooves 2a located at the outermost side in the tire width direction, and the tread edges TE, and center land portions 3c and 3d are divided by the circumferential main groove 2b and a pair of circumferential main grooves 2a.

The shoulder land portions 30a and 30b are divided into a plurality of block land portions 301a and 301b by a plurality of width direction grooves 50 (in this embodiment, within the contact patch, two of the width direction grooves 50 in the shoulder land portions 30a and 30b, respectively) extending in the tire width direction and connected to the tread edge TE and the circumferential main groove 2a (in this embodiment, there is one block land portion 301a and 301b each in which the entire block land portion is located within the contact patch, and there are two block land portions 301a and 301b each in which a portion of the block land portion is located within the contact patch).

The width direction grooves 50 may extend parallel to the tire width direction WD in the tire plane view, or may extend at an inclination angle of 45° or less with respect to the tire width direction WD. Also, the width direction grooves 50 may extend in a straight line in the tire width direction, as illustrated in Figure 4, or may extend in a zigzag or wavy pattern, etc. in the tire width direction.

In the tire 20 of this embodiment, the number of block land portions disposed within the contact patch is not particularly limited, but it is preferred that two to ten of the block land portions 301a and 301b are arranged within the contact patch of the tire, respectively. By arranging two or more of the block land portions 301a and 301b within the contact patch, respectively, drainage performance of the tire can be more effectively ensured, and by setting the number of block land portions to 10 or less, respectively, sufficient rigidity of the block land portions can be maintained.

Here, the term "arranged within the contact patch" shall mean that the block land portions 301a and 301b are arranged within the contact patch if any part of the block land portions are located within the contact patch.

In the tire 20 of this embodiment, it is preferable that one or more shoulder grooves 4 are arranged in the block land portions 301a and 301b respectively, from the viewpoint of effectively ensuring sufficient drainage performance when tire wear has progressed. The number of the shoulder grooves 4 is preferably no more than three in the block land portions 301a and 301b respectively, from the viewpoint of maintaining sufficient rigidity of the block land portions where the shoulder grooves 4 are arranged.

### INDUSTRIAL APPLICABILITY

The tire of the present invention can be used for any type of tire, but can suitably be used for passenger car tires.

### REFERENCE SIGNS LIST

1, 11 Tread surface
2, 2a, 2b Circumferential main groove
3a, 3b, 30a, 30b Shoulder land portion
3c, 3d Center land portion
4 Shoulder groove
4a Widened section
4b Narrowed groove section
10, 20 Tire
41, 42 Groove wall
43 Groove bottom
50 Width direction groove
301a, 301b Block land portion
Pw Maximum width portion
WD Tire width direction
CD1, CD2 Tire circumferential direction
TE Tread edge

## Claims

1. A tire (20) having a plurality of circumferential main grooves (2a, 2b) extending in the tire circumferential direction (CD1, CD2) on a tread surface (11),
at least one shoulder groove (4) is provided in a shoulder land portion (30), which is defined by the circumferential main groove (2a) located at the outermost side in the tire width direction (WD) and a tread edge (TE),
the shoulder groove (4) has a widened section (4a) on the groove bottom side where a groove width is larger than that on the tread surface side,
the shoulder groove (4) extends along the tire width direction (WD) on the tread surface (11),
a maximum width portion (Pw) in the tire radial direction of the widened section (4a) extends at an angle of 25° or more with respect to the tire width direction (WD) in a plane view of the tread surface (11),
wherein extension length on the tread surface (11) of the shoulder groove (4) is 25% or more of a ground contact width of the tire,
wherein the shoulder land portion (30) is divided into a plurality of block land portions (301a, 301b) by a plurality of width direction grooves (50) extending in the tire width direction (WD) and connected to the tread edge (TE) and the circumferential main groove (2a), and
two to ten of the block land portions (301a, 301b) are arranged within a contact patch of the tire (20), wherein contact patch means the outer surface of the tire that contacts the road surface when the tire is assembled on the rim, filled with the prescribed internal pressure, and grounded with the maximum load applied.

2. The tire (20) according to claim 1, wherein a groove width on the tread surface (11) of the shoulder groove (4) is less than 1.5 mm.

3. The tire (20) according to claim 1 or 2, wherein three to ten of the shoulder grooves (4) are arranged in the shoulder land portion (30) within a contact patch of the tire (20).

4. The tire (20) according to any one of claims 1 to 3, wherein one to three of the shoulder grooves (4) are arranged in each of the block land portions (301a, 301b).

## Patentansprüche

1. Reifen (20), der eine Vielzahl von in der Reifenumfangsrichtung (CD1, CD2) erstreckenden Hauptumfangsrillen (2a, 2b) auf einer Laufflächenoberfläche (11) aufweist, wobei
mindestens eine Schulterrille (4) in einem Schulterstegabschnitt (30) vorgesehen ist, der durch die am äußersten Rand in der Reifenbreitenrichtung (WD) lokalisierte Hauptumfangsrille (2a) und eine Laufflächenkante (TE) bestimmt wird,
die Schulterrille (4) auf der Rillenbodenseite einen verbreiterten Teil (4a) aufweist, in dem eine Rillenbreite größer ist als die auf der Laufflächenoberflächenseite,
die Schulterrille (4) sich auf der Laufflächenoberfläche (11) entlang der Reifenbreitenrichtung (WD) erstreckt,
ein Abschnitt mit der maximalen Breite (Pw) in der Reifenradialrichtung des verbreiterten Teils (4a) in einer Draufsicht auf die Laufflächenoberfläche (11) in einem Winkel von 25° oder mehr zur Reifenbreitenrichtung (WD) erstreckt,
wobei die Erstreckungslänge der Schulterrille (4) auf der Laufflächenoberfläche (11) 25 % oder mehr der Bodenkontaktbreite des Reifens beträgt,
wobei der Schulterstegabschnitt (30) durch eine Vielzahl von Breitenrichtungsrillen (50), die sich in der Reifenbreitenrichtung (WD) erstrecken und mit der Laufflächenkante (TE) und der Hauptumfangsrille (2a) verbunden sind, in eine Vielzahl von Blockstegabschnitten (301a, 301b) unterteilt ist, und
zwei bis zehn der Blockstegabschnitte (301a, 301b) innerhalb einer Aufstandsfläche des Reifens (20) angeordnet sind, wobei als Aufstandsfläche die Außenfläche des Reifens definiert ist, die eine Straßenoberfläche berührt, wenn der Reifen auf einer Felge montiert ist, mit einem vorgeschriebenen Innendruck gefüllt ist und mit einer maximalen angewendeten Last auf dem Boden aufliegt.

2. Reifen (20) nach Anspruch 1, wobei eine Rillenbreite auf der Laufflächenoberfläche (11) der Schulterrille (4) weniger als 1,5 mm beträgt.

3. Reifen (20) nach Anspruch 1 oder 2, wobei drei bis zehn der Schulterrillen (4) im Schulterstegabschnitt (30) innerhalb einer Aufstandsfläche des Reifens (20) angeordnet sind.

4. Reifen (20) nach einem der Ansprüche 1 bis 3, wobei eine bis drei der Schulterrillen (4) in jedem der Blockstegabschnitte (301a, 301b) angeordnet sind.

## Revendications

1. Pneu (20) comportant une pluralité de rainures principales circonférentielles (2a, 2b) s'étendant dans la direction circonférentielle du pneu (CD1, CD2) sur une surface de bande de roulement (11),
au moins une rainure d'épaulement (4) est prévue dans une partie d'appui d'épaulement(30), qui est définie par la rainure principale circonférentielle (2a) située du côté le plus à l'extérieur dans le sens de la largeur du pneu (WD) et un bord de bande de roulement (TE),
la rainure d'épaulement (4) présente une section élargie (4a) sur le côté inférieur de la rainure où une largeur de rainure est plus grande que celle du côté de la surface de la bande de roulement,
la rainure d'épaulement (4) s'étend dans le sens de la largeur du pneu (WD) sur la surface de la bande de roulement (11),
une partie de largeur maximale (Pw) dans la direction radiale du pneu de la section élargie (4a) s'étend à un angle de 25° ou plus par rapport à la direction de la largeur du pneu (WD) dans une vue en plan de la surface de la bande de roulement (11),
dans lequel la longueur d'extension sur la surface de bande de roulement (11) de la rainure d'épaulement (4) est de 25 % ou plus d'une largeur de contact au sol du pneu,
dans laque lequel la partie d'appui d'épaulement (30) est divisée en une pluralité de parties d'appui de pavés (301a, 301b) par une pluralité de rainures dans le sens de la largeur (50) s'étendant dans le sens de la largeur du pneu (WD) et reliées au bord de la bande de roulement (TE) et à la rainure principale circonférentielle (2a), et
deux à dix des portions d'appui de pavés (301a, 301b) sont disposées dans une zone de contact du pneu (20), où la zone de contact signifie la surface extérieure du pneu qui entre en contact avec la surface de la route lorsque le pneu est assemblé sur la jante, rempli avec la pression interne prescrite, et mis à la terre avec la charge maximale appliquée.

2. Pneu (20) selon la revendication 1, dans lequel une largeur de rainure sur la surface de bande de roulement (11) de la rainure d'épaulement (4) est inférieure à 1,5 mm.

3. Pneu (20) selon la revendication 1 ou 2, dans lequel trois à dix des rainures d'épaulement (4) sont disposées dans la partie d'appui d'épaulement (30) à l'intérieur d'une surface de contact du pneu (20).

4. Pneu (20) selon l'une quelconque des revendications 1 à 3, dans lequel une à trois des rainures d'épaulement (4) sont disposées dans chacune des parties d'appui de pavés (301a, 301b).
